# EUROPÄISCHE PATENTANMELDUNG

(11) **EP 4 738 577 A1**
(43) Veröffentlichungstag der Anmeldung: **06.05.2026**
(21) Anmeldenummer: 25206428.2
(22) Anmeldetag: 02.10.2025
(51) Int. Cl.: H01M 50/258, A62C 3/16, H01M 10/42, H01M 10/48, H01M 10/613, H01M 50/233, H01M 50/251

(54) **STAPELBARE LAGERWANNE FÜR BATTERIEN MIT GROSSER LADEKAPAZITÄT**

(30) Priorität: 01.11.2024 DE 102024131957
(71) Anmelder: Pöhler, Burkard, 33102 Paderborn (DE)
(72) Erfinder: Pöhler, Burkard, 33102 Paderborn (DE)
(74) Vertreter: Reinhardt, Thomas Johannes

(57) **Zusammenfassung**

Stapelbarer Lagerbehälter (55) mit Lüftungsöffnungen, insbesondere eine stapelbare Lagerwanne, für Batterien mit großer Ladekapazität, insbesondere für Traktionsbatterien von Elektrofahrzeugen in ihrem "Second Life". Um bei Überhitzen oder in-Brand-Geraten einer Batterie die Schäden auf die Batterie und den Behälter zu begrenzen, wird vorgeschlagen, den Behälter mit einem Boden und mit Seitenwänden aus Beton herzustellen, die Belüftungsöffnungen und unter Anderem eine Wasserkammer aufweisen, wobei die Wasserkammer dazu eingerichtet ist, beim Aufeinanderstapein baugleicher Behälter ein Segment eines Löschmittelkanals (20) zu bilden, der mit einem Öffnungselement (23) dazu eingerichtet ist, die weiteren Behälter (55) desselben Stapels mit Löschmittel zu versorgen.

## Beschreibung

### STAND DER TECHNIK

Die vorliegende Erfindung betrifft einen stapelbaren Lagerbehälter mit Lüftungsöffnungen, insbesondere eine stapelbare Lagerwanne, für Batterien mit großer Ladekapazität, insbesondere für Traktionsbatterien von Elektrofahrzeugen.

Aufgrund der zunehmenden Anzahl von Elektrofahrzeugen, die mit Batterien mit relativ großer Ladekapazität, also beispielsweise 30 kWh und mehr, ausgestattet sind, kann für die nähere Zukunft mit einer immer größer werdenden Anzahl von gebrauchten Batterien gerechnet werden, die wegen Alterung, Ausfall oder Unfall des Fahrzeugs nicht mehr im Fahrzeug verwendbar sein werden. Diese Batterien können dann jedoch immer noch als stationäre Speicher für das Stromnetz dienen und bekommen damit ihr sogenanntes "Second Life". Dazu müssen sie sicher gelagert und über Verbindungsanschlüsse mit dem Stromnetz und einem Kommunikations- und Steuernetz eines Betreibers von solchen Batterien verbunden werden. Die Dauer dieses "Second Life" wird bei Lithium-basierten Batterien auf mindestens 10 Jahre geschätzt. Erst danach schließt sich sinnvoller Weise die Rückgewinnung und Wiederverwertung der verwendeten Rohstoffe an.

Allein für Deutschland kann mit ca. 50 Millionen Batterien gerechnet werden, die in einem typischen 16 Jahre dauernden Zyklus, der durchschnittlichen Gebrauchsdauer eines PKW-Fahrzeugs, immer wieder anfallen. Wenn pro Batterie eine Restkapazität von 50kWh angenommen wird, entsteht ein Speicherpotential von 2,45 Terawattstunden. Alle derzeitigen 37 Pumpspeicherkraftwerke in Deutschland speichern nur 0,04 Terawattstunden. Dies zeigt, wie wertvoll der Beitrag der Second Life Batterien, die dezentral betrieben werden können, für das Stromnetz sein kann. Der Bedarf an "aktiver Lagerfläche", der notwendig ist, um diese Batterien sicher zu betreiben, ist allerdings riesig.

Im Stand der Technik gibt es derzeit im Wesentlichen drei unterschiedliche Umgehensweisen mit gebrauchten Batterien des genannten Typs:
1) Zerlegung der Batterie in die Einzelkomponenten. Gehäuse, Kabel und Batteriemanagementsystem (BMS) werden ausgebaut. Die Einzelkomponenten werden typischerweise in sogenannte "10-Fuß-Container" eingebracht und mit einer neuen Elektronik verkabelt. Die benötigte Kapazitätsdichte der oben erwähnten aktiven Lagerfläche inclusive Sicherheitszone liegt bei ca. 40 kWh/m². Der Aufwand ist relativ groß und arbeitsintensiv. Es werden in nachteilhafter Weise viele, noch funktionsfähige Bauteile verschwendet.
2) Der Einbau kompletter Batterien in einen sogenannten "20-Fuß-Container" sowie weiterer Elektronik kommt auf eine Kapazitätsdichte von ca. 25 kWh/m². Der Aufwand ist ebenfalls relativ groß. Diese Variante benötigt etwa 60% mehr Platz als die zuvor genannte Variante. Beide Varianten sind für eine Aufstellung im Freien konzipiert und benötigen Abstand zu gegebenenfalls vorhandenen Nachbarcontainern aufgrund von Brandschutzanforderungen. Beim sogenannten "Thermischen Durchgehen" einer Batterie werden die Container von der Feuerwehr komplett geflutet. Alle Batterien und die damit verbundenen wertvollen Komponenten der Leistungs- und Kommunikationselektronik werden dabei in nachteilhafter Weise unbrauchbar.
3) Der Einbau kompletter Batterien in vorhandene oder neue Gebäude. In Deutschland ist derzeit ein Lager für 17.000 neuwertige Batterien als Produktionspuffer auf einer Fläche von 20.300m² geplant. Daraus ergibt sich eine Kapazitätsdichte von 84 kWh/m². Weitere Details hierzu sind abrufbar unter

### Lithium Ionen Batterielogistik: Sicherer Transport und Lagerung (hartmann-international.de)

zuletzt abgefragt am 09.10.2024. Die in den Gebäuden genutzten Lagerbereiche sind üblicherweise kleinteilig aufgebaut und durch Brandschutzwände unterteilt, damit im Brandfall der Schaden klein bleibt. Damit entsteht in nachteilhafter Weise ein hoher Gebäudekostenanteil und Bauaufwand bei der Lagerung der Batterien.

Hierzu zählt auch die sogenannte "BMW Batterie-Speicherfarm" in Leipzig. Details siehe unter

### BMW Batterie-Speicherfarm Leipzig. (bmwgroup.com)

zuletzt abgerufen am 09.10.2024. Nach den Informationen und visuellen Eindrücken aus dem dort abrufbaren Video sind die dort gezeigten Regal-Lagerplätze auf BMW-eigene Batterien ausgelegt und damit vermutlich nicht für andere Batterien mit unterschiedlicher Bauart und anderen Abmessungen geeignet. Unklar ist, wie im Brandfall die Maßnahmen aussehen und welche Folgen sie haben.

Die Aufgabe der vorliegenden Erfindung liegt darin, verbesserte Lagervorrichtungen zum Lagern und Betreiben von gebrauchten oder neuen Batterien der eingangs genannten Art zu schaffen, ein Brandschutzverfahren zu schaffen, das bei Überhitzen oder in-Brand-Geraten einer Batterie die Schäden auf die Batterie und den Behälter begrenzen und ein Lagerverfahren zum Errichten und Betreiben eines Blocklagers in einer Industriehalle mit höherer, elektrischer Kapazitätsdichte [kWh / qm], bezogen auf die benötigte Hallenfläche.

### VORTEILE DER ERFINDUNG

Der erfindungsgemäße Gegenstand mit den Merkmalen des Anspruchs 1 bzw. die Gegenstände der Nebenansprüche lösen diese Aufgabe.

In den Unteransprüchen finden sich vorteilhafte Weiterbildungen und Verbesserungen des jeweiligen Gegenstandes der Erfindung.

Gemäß einem ersten Aspekt der vorliegenden Erfindung wird kurz zusammengefasst ein belüftbarer, bevorzugt quaderförmiger Lagerbehälter für Batterien der eingangs genannten Art offenbart, der vorzugsweise eine einzige Batterie aufnimmt, der im Wesentlichen aus Beton mit ausreichend groß dimensionierten Wandstärken besteht, wodurch er auch im beladenen Zustand sehr hoch mit batteriebeladenen Behältern gleicher Bauart per Kran gestapelt werden kann, wobei der Behälter Führungselemente aufweist, die beim Aufsetzvorgang eines oberen Behälters auf einen im Stapel darunter befindlichen Behälter eine passgenaue Bewegungsführung des oberen Behälters ermöglichen, wobei die Batterien beim Aufsetzvorgang automatisch ohne manuellen Zugriff durch Personal elektrisch mit den anderen Batterien im Stapel verbunden werden, und der Behälter technische Notfall-Einrichtungen besitzt, die ihn dazu befähigen, dass im Notfall, insbesondere im Überhitzungs- oder im Brand- oder im Rauchentwicklungsfall und vermutlich auch im Explosionsfall einer Batterie diese betroffene Batterie selektiv mit technischen Gegenmaßnahmen beaufschlagt werden kann. Beim Stapeln dient der Boden eines oberen Behälters bevorzugt als Deckel für den Behälter darunter.

Eine erste Voraussetzung dafür ist, dass eine Batterie von Fachpersonal vorab in einen solchen Behälter verbracht und dort mittels Schüttgut oder geeigneten Keilen fixiert wurde, und das batterieeigene Batteriemanagementsystem an ein standardisiertes, den Lade- und Entladestrom führendes Stecker-Buchsen-Anschluss-System, das am Behälter bevorzugt in einer eigens dort befindlichen Steckerkammer vorhanden ist, angeschlossen wurde.

Eine weitere Voraussetzung ist, dass die Batterie über einen Steuerkreis, der bevorzugt in einer ebenfalls separaten Elektronikkammer des Behälters angeordnet ist und im Wesentlichen die Funktion einer üblichen Wallbox ausübt, zwecks Kommunikation und Steuerung mit bzw. von einer Steuerzentrale des Blocklagers an ein für alle Behälter des Stapels verfügbares Bussystem angeschlossen ist.

Die Innenmaße eines erfindungsgemäßen Behälters sind vorzugsweise so gestaltet, dass sie zu 70 bis 100% der Traktionsbatterien von PKW passen. In Frage kommen derzeit beispielsweise die Abmessungen: 0,5 m hoch, 2 Meter breit und 3 Meter lang. Die Außenmaße ergeben sich dabei bei einer Wandstärke von 0,1 Metern zu 0,6 m hoch, 2,20 Meter breit und 3,20 Meter lang. Eine nach mehreren Gesichtspunkten wie Brandschutzanforderungen, Statik, technisch praktikable maximale Stapelhöhe, genehmigungsfähige Hallenhöhe, Betreiberkosten, etc. optimierte Wandstärke kann auch abweichende, eher größere Maße für die Wandstärke und abweichende Wandstärken für die Bodenfläche des Behälters ergeben.

Mit anderen Worten offenbart die vorliegende Erfindung einen Behälter zur Lagerung von Traktionsbatterien von Elektrofahrzeugen, mit einem Boden und mit Seitenwänden, die Belüftungsöffnungen aufweisen, der dadurch gekennzeichnet ist,
dass der Boden und die Seitenwände im Wesentlichen aus Beton oder einem anderem, ähnlich druckfestem und hitzeresistentem Material bestehen,
wobei die Seitenwände eines Behälters obere Auflageflächen aufweisen zur Herstellung einer stabilen Auflage von unteren Auflageflächen der Seitenwände eines darüber angeordneten Behälters gleicher Bauart,
wobei die Seitenwände eine Wandstärke besitzen, die derart ausgebildet ist, dass deren Tragfähigkeit ein Aufeinanderstapeln einer Anzahl von bevorzugt wenigstens 10 batteriebeladenen Behältern gleicher Bauart ermöglicht,
wobei an dem Behälter Aufnahmen für Eingriffteile eines Krans zum Abheben eines oder gleichzeitig mehrerer Behälter vorgesehen sind,
wobei an dem Behälter Zentriervorrichtungen vorgesehen sind, die für ein passgenaues Aufeinanderstapeln der Behälter durch einen Kran eingerichtet sind,
wobei in dem Behälter eine Wasserkammer vorgesehen ist, die eingerichtet ist für die Aufnahme von Lösch- oder Kühlwasser und für eine automatisch bewirkte Weiterleitung durch ein Öffnungselement zur Flutung der Batterie im Notfall,
und wobei die Wasserkammer dazu eingerichtet ist, beim Aufeinanderstapeln von Behältern ein Segment eines Löschmittelkanals zu bilden, der dazu eingerichtet ist, die weiteren Behälter desselben Stapels mit Löschmittel zu versorgen.

Dies wird bevorzugt dadurch bewirkt, dass im Innenraum der Wasserkammer ein Rohrstück an einer genau definierten Stelle fest verankert ist, das durch eine genau passende, wasserdicht abgeschlossene Öffnung im Behälterboden bündig mit der Unterseite des Behälterbodens abschließt und bis knapp unter einer oberen, waagerecht liegenden virtuellen Abschlussebene reicht, die durch die Oberkanten der Wände gebildet ist. Dort sind Dichtungsteile angebracht, die beim Aufeinanderstapeln vom darüber befindlichen Behälter komprimiert werden und somit eine Dichtung bilden. Das Rohrstück bildet zusammen mit der umgebenden Wasserkammer damit ein Segment eines Löschmittelkanals, der im Stapel von unten bis ganz oben reicht und beim Aufstapeln automatisch gebildet wird, sofern in einem Stapel immer baugleiche Behälter in derselben Orientierung mit übereinander liegenden Rohrstücken und Wasserkammern aufgestapelt werden. Die Dicke der komprimierten Dichtungen sollte so dimensioniert sein, dass die aufeinander gestapelten Behälter nicht nur auf diesen Dichtungen ruhen, sondern dass der Auflagedruck auch möglichst gleichmäßig auf den horizontalen Auflageflächen der Wände des Behälters ruht.

Der Notfall wird bevorzugt durch das Batteriemanagementsystem (BMS) sensiert und gesteuert:
Zunächst sensieren die Thermofühler des BMS, optional unterstützt durch in der Batteriekammer enthaltene Rauchmelder ein sogenanntes "Thermisches Durchgehen" einer Batterie aufgrund der Temperaturerhöhung bzw. einer Rauchentwicklung der Batterie, worauf das BMS einen ggf. ablaufenden Lade- oder Entladevorgang abschaltet. Die Rauch- und Temperaturmelder lösen dabei bei vorgegebenen Messwerten aus. Steigt die Temperatur weiter, kommt es zu einem ersten Alarm, der die elektrische Isolierung der Batterie einleitet. Ein zusätzlicher Temperaturfühler in der Batteriekammer erfasst die aktuelle Innentemperatur der Batteriekammer. Die Flutung der Batteriekammer wird bei einer vorgegebenen Temperatur automatisch eingeleitet. Ab einer bestimmten Innentemperatur werden die Öffnungen eines Behälters mit gefluteter Batteriekammer nach außen automatisch durch Schaum verschlossen, gemäß Techniken, die im Stand der Technik vorhanden sind.

Das Öffnungselement kann gemäß den erforderlichen Brandschutzbestimmungen und gemäß Stand der Technik ausgewählt werden. Es kann zum Beispiel als motorisch betriebener Schieber oder mit einer motorisch schwenkbaren Absperrklappe ausgebildet sein.

Damit ist eine räumlich sehr dichte Lagerung mit einer sehr großen Anzahl von Batterien in einem hier als "Blocklager" bezeichneten Batterielager auf sichere Art und Weise und ein sicherer Betrieb der gelagerten Batterien als dynamisch aufladbarer und entladbarer Stromspeicher zur dezentralen Energieversorgung und zur Entlastung des Stromnetzes möglich. Die genannten Notfall-Einrichtungen enthalten erfindungsgemäß einen Löschmittelversorgungskanal, insbesondere bei Wasser als Löschmittel einen Wasserkanal, der im einzelnen Behälter als Segment bereits angelegt ist, der beim Anwachsen des Stapels bauartbedingt mitwächst und durch den gesamten Batteriestapel hindurchgeht, und über den im Notfall ein betroffener Batteriebehälter selektiv mit Wasser geflutet werden kann.

Es werden also in einer Industriehalle, die mit einem Deckenkran vom Stand der Technik ausgestattet ist, oder in einem anderweitig überdachten Lagerplatz viele Stapel von aufeinander gestapelten Behältern gebildet, beispielsweise 25 Meter hoch, wobei in je einem einzigen Stapel bei einer Behälterhöhe von 0,5 Metern ca. 40 Behälter passgenau aufeinandergestapelt sind. Je nach Hallengeometrie sind beispielsweise 10 Stapel in einer Reihe jeweils mit 0,5 Metern Abstand nebeneinander angeordnet sind, so dass in einer etwa 27 Meter langen Reihe von Stapeln etwa 400 Behälter sind. Von diesen Reihen sind nun beispielsweise 50 Stück parallel zueinander ebenfalls mit einem Abstand von 0,5 Metern angeordnet, so dass sich ein "Stapelfeld" von 27 Meter Breite und (50 x 3,70 m = ) 185 Metern Länge und ein Blocklager mit etwa 25 Metern Bauhöhe ergibt, das 20.000 Batterien in einem einzigen Blocklager lagern kann und elektrisch betreibbar macht. Bei einer durchschnittlichen, nutzbaren Batteriekapazität von 50 kWh hat das Blocklager eine Nutzkapazität von 1 GWh.

Vorzugsweise enthält der Behälter eine Batteriekammer, die von anderen Bereichen des Behälters wasserdicht getrennt eingerichtet ist, und die im Notfall durch eine Öffnung zum Wasserkanal geflutet werden kann.

Ein Basissegment, das als Basisteil pro Stapel auf dem Hallenboden aufliegt und auf das der unterste Behälter zwecks stabilem Stand aufgesetzt wird, enthält einen Hohlraum, der eine Wechselrichterstation zum Umwandeln des Batteriegleichstroms in den örtlich vorhandenen Drehstrom und einen Steuerschrank mit Überwachungselektronik für alle wesentlichen Funktionen des Behälterstapels aufnimmt, gehört neben dem erfindungsgemäßen Behälter zum erfindungsgemäßen Lagersystem dazu. Das Basissegment enthält auch die Rohranschlüsse und Pumpenaggregate zum Einpumpen des Löschmittels sowie zum Abpumpen des Löschmittels in bzw. aus dem Stapel.

Auch ein Deckenkran einschließlich eines speziell an den Behälter angepassten Lastaufnahmemittels, gehört zum erfindungsgemäßen Lagersystem dazu. Das Lastaufnahmemittel ist am Kranhaken befestigbar, hat vorzugsweise eine dem Behälterumriss angepasste eigene Umrissform und kann beim Anheben, Navigieren und Versetzen von Behältern mit formangepassten, motorisch betriebenen Eingriffteilen in Eingriff mit dazu passenden Eingriffteilaufnahmen am Behälter, die in einem Ausführungsbeispiel an einem als "Zentrierbolzen" bezeichneten Gegenstand vorgesehen sind, gebracht und dort verriegelt bzw. entriegelt werden. Bei einem quaderförmigen Batteriebehälter hat das Lastaufnahmemittel vorzugsweise ebenfalls einen quaderförmigen Umriss, so dass es in etwa kantengleich von oben auf einen gestapelten Behälter zugreifen kann. Es enthält vorzugsweise einen Stahlrohrrahmen und Ketten für die Aufhängung an einem Kranhaken des Deckenkrans, Kameras zur ergänzenden visuellen Kontrolle, einen Kabelschlepp für die notwendigen Kabel für Steuerung und Kommunikation, Sensoren zur Abstandsmessung zu dem Zielstapel und dessen mehrere Nachbarstapel, sowie Infrarotkameras zur Branderkennung sowie einen Schüttgutvorratsbehälter, aus dem im Brandfall das Schüttgut bereits während des Transports auf eine brennende Batterie abgeworfen werden kann. Das Lastaufnahmemittel enthält vorzugsweise weiter eine Fixiervorrichtung, mit der ein auf einen Behälter passender Behälterdeckel im Bedarfsfall auf einen Behälter aufgeschraubt und von diesem angeschraubt und abgenommen werden kann. Die Schraubverbindungen sind bei Quaderform zweckmäßig an den vier Ecken angeordnet. Alternativ dazu kann der Deckel analog wie ein Behälter an den Zentrierbolzen verriegelt werden.

Der Kran verfügt über eine Pendeldämpfung nach dem Stand der Technik, vgl. beispielsweise:
https://www.abus-kransysteme.de/
(zuletzt abgerufen am 29.10.2024).

Um eine möglichst horizontale Ausrichtung des am Kranhaken hängenden Behälters unabhängig von der Schwerpunktlage des Behälters zu erreichen, sind im Lastaufnahmemittel Schienen in x- und in y- Richtung angeordnet, in denen motorisch verschiebbare Korrekturgewichte verfahren werden können, die in einem Regelkreis mit Neigungssensoren eine Schieflage automatisch korrigieren.

Unter allen Umständen muss beim Aufstapeln ein unkontrollierter Kontakt der herannahenden, mehr oder weniger schwingenden Masse mit den exponiert aufragenden Steckerkontakten und den Zentrierbolzen der unteren Wanne bzw. der Basisstation vermieden werden. Dafür sind bevorzugt außen an den vier Seiten des Lastaufnahmemittels teleskopisch in z- Richtung bewegbare Zentrierarme vorgesehen, an deren unteren Enden jeweils Zentrierrollen angebracht sind. Nähert sich der hängende Behälter dem obersten Behälter im Zielstapel trotz Lageregelung in leichter Schieflage, so berühren zunächst eine oder zwei der Zentrierrollen den obersten Behälter und dämpfen eine eventuell vorhandene, seitliche Schwingung sowie eine Rotation der Last um die Hochachse. Hauptaufgabe dieser Zentrierrollen ist jedoch eine Kompensation einer eventuellen Fehlposition der Behälter durch das Aufstapeln der Behälter bedingt durch Bau- und Lagetoleranzen.

Um eine Rotation des hängenden Behälters um die Hochachse zu minimieren, können mehrere verschiedene Gegenmittel einzeln oder kombiniert vorgesehen sein und zur Anwendung kommen:
So hängt das Lastaufnahmemittel bei Quaderform der Behälter vorzugsweise an vier Ketten oder Stangen, die seine oberen vier Ecken mit dem Kranhaken verbinden. Diese erlauben gleichzeitig eine gewisse Lagetoleranz der Bauteile zueinander und verhindern starke Stöße.

Alternativ oder kombiniert können am Hebezeug des Kranes nicht ein Kranhaken sondern zwei oder vier Tragseile oder auch Traggurte mit einem vorgegebenem, möglichst großem Abstand voneinander vorhanden sein, deren jeweiliges Tragseil oder jeweiliger Traggurt an dem Lastaufnahmemittel mit möglichst großem Abstand voneinander angebracht sind, wobei damit gleichzeitig eine Schieflage der Last wegen außermittig liegendem Schwerpunkt ausgeglichen werden kann. Alle Seile oder Gurte werden in diesem Falle von einem gemeinsamen Antrieb oder von vier miteinander synchronisierten Antrieben angetrieben.

Weiter kann alternativ oder kombiniert im Lastaufnahmemittel eine horizontal angeordnete Scheibe vorhanden sein, die motorisch drehbar ist, die als sogenanntes "Reaktionsrad" wirkt, deren Bewegung mittels eines am Lastaufnahmemittel angebrachten Giersensors gesteuert oder geregelt wird und die dabei einen die Rotation der Last um die Hochachse ausgleichenden Drehimpuls erzeugt. Dabei ist die Masse der Scheibe, deren Beschleunigung und deren Rotationsgeschwindigkeit so groß gewählt, dass eine Rotationsschwingung der Last und des Lastaufnahmemittel komplett kompensiert wird. Nach dem erfolgreichen Absetzen der Wanne auf dem Basissegment am Boden bzw. auf dem Stapel kann die Scheibe noch gekoppelt an den aufgesetzten Behälter per Rekuperation über einen Bremswiderstand abgebremst werden, ohne dass das Lastaufnahmemittel oder der Behälter in Gegenrotation versetzt wird, da dann der Behälter mit dem Lastaufnahmemittel kraftschlüssig verbunden ist. Beispielhaft kann die Scheibe aus Stahl gefertigt sein, eine Masse von 10 kg besitzen, einen Durchmesser von 50 cm besitzen und von einem Servomotor mit ca. 1 kW Leistung angetrieben sein, um die Rotation eines Behälters mit den o.g. Maßen von etwa 2,2 m x 3, 2 m und einer Masse von ca. 3000 kg zu dämpfen.

Weiter können alternativ oder kombiniert am Lastaufnahmemittel oder am Behälter an exponierten Stellen Dämpfungselemente wie Gummipuffer oder Federn angebracht werden, die dann im Falle einer Kollision einen dämpfenden Effekt auf die Schwingungen haben.

Ein weiterer Aspekt der vorliegenden Erfindung ist ein vollautomatisch ablaufendes Brandschutzverfahren, das aufgrund der technischen Merkmale des erfindungsgemäßen Behälters ohne den Zugriff von Feuerwehren durchführbar ist:
Jeder Behälter enthält dafür vorzugsweise Infrarotsensoren oder andere Wärmesensoren, die eine Überschreitung einer kritischen Temperatur in der direkten Umgebung der Batterie detektieren und zunächst selektiv am betroffenen Behälter Lüfter einschalten, die ebenfalls in dem Behälter vorhanden sind. Führt die dadurch zugeführte Kühlluft nicht zu einer ausreichenden Abnahme der Temperatur, oder steigt diese weiter an, so wird ab einer vorzugebenden, sensierten Temperatur der betroffene Behälter selektiv mit Wasser bzw. einem anderen Kühl- oder Löschmittel je nach Batterietyp, der im Stapel vorhanden ist, über einen einfach gehaltenen, mechanischen Vorgang geflutet, der die Wasserkammer mit dem Raum innerhalb des Behälters verbindet, in dem sich die Batterie befindet. Diese Maßnahme dürfte in den meisten Fällen für eine rasche Temperaturabnahme sorgen und einen Brand mit einem Ausschlagen von Flammen verhindern. In diesem Zusammenhang können auch Dämpfe oder Rauchgase durch entsprechende Sensoren sensiert werden, die an den Lüftungsöffnungen der erfindungsgemäßen Behälter vorhanden sind und die dann ebenfalls die Flutung einer Batterie einleiten können. Die Steuerung erfolgt durch das oben genannte Kommunikationsnetz vollautomatisch und kann bei Bedarf durch Fachpersonal manuell ergänzt werden, das Bilder von Kameras, die am Kran angebracht sind und die Außenseiten des Behälters zeigen, sehen kann.

Ein zentraler Vorteil des erfindungsgemäßen Behälters ist sein modulartiger, universell verwendbarer Aufbau, der ein fast beliebig großes Erweitern eines Blocklagers und einen automatischen Betrieb des Lagers möglich macht, weil die Technik des Aufstapelns bei der Erweiterung durch zusätzliche Behälter, die Technik des Entfernens eines Behälters irgendwo aus einem Stapel und die Technik bei der Behandlung von Notfällen immer dieselbe ist: Der Kran nähert sich von oben mit seinem Lastaufnahmemittel an den obersten Behälter des betroffenen Stapels, greift sich den obersten Behälter und transportiert ihn an einen gewünschten anderen, ggf. temporären Lagerort, wo er ihn loslässt. Dann wiederholt sich der Vorgang ggf. mehrfach.

Ein signifikanter Vorteil gegenüber dem Stand der Technik besteht in der Verwendbarkeit des erfindungsgemäßen Behälters für ganz unterschiedliche Batterietypen mit unterschiedlichen Maßen.

Bei einem Containersystem als Batterielager vom Stand der Technik muss ein Container nach 10 Jahren komplett abgebaut und ersetzt werden. Im erfindungsgemäßen Blocklager kann ein ständiger Austausch der Batterien stattfinden, so dass ein kontinuierlicher Betrieb möglich ist. Dies bietet erhebliche wirtschaftliche Vorteile.

Ein weiterer Aspekt der vorliegenden Erfindung ist ein Lagerverfahren für die eingangs genannten Batterien, das aufgrund der technischen Merkmale des vorgenannten erfindungsgemäßen Behälters und der technischen Merkmale des vorgenannten erfindungsgemäßen Brandschutzverfahrens ohne Freihalten von Brandschutzzonen für die Feuerwehr innerhalb des erfindungsgemäß gebildeten Blocklagers durchführbar ist.

Der Fachmann versteht, dass das erfindungsgemäß gebildete Blocklager durch das vorgenannte automatisch ablaufende Brandschutzverfahren einen autonom arbeitenden Brandschutz enthält, der es ermöglicht, dass ein Feuer oder eine ungeplante Erhitzung einer Batterie sofort und zuverlässig unter Kontrolle gebracht wird. Dadurch ist nicht mehr notwendig, zwischen den einzelnen Stapeln und Reihen des Blocklagers eine Vielzahl an Brandschutzzonen einzurichten, die ohne die Erfindung gassenartig mit einer Gassenbreite von mindestens 5 Metern aufgebaut sein müssten und damit sehr viel Platz beanspruchen würden, was den Betrieb der Batterien signifikant verteuern würde.

Weitere Vorteile ergeben sich bei Nutzung der vorliegenden Erfindung wie folgt:
Eine Wiederverwendung aller Komponenten der Batterie einschließlich des Batteriemanagementsystems (BMS) und der zugehörigen Kabel und Stecker ist möglich, so dass die Nutzung von gebrauchten Batterien ressourcenschonend erfolgt.

Es ist keine Zerlegung der Batterien in Einzelzellen notwendig.

Der erfindungsgemäße Batteriebehälter ist vorzugsweise so gebaut, dass er im rechtlichen Sinn eine eigene Brandschutzzone darstellen kann. Ein Feuer darf eine Brandschutzzone nicht verlassen und ein Übergreifen auf andere Zonen darf nicht erfolgen. Der erfindungsgemäße Batteriebehälter kann aufgrund seiner erfindungsgemäßen Eigenschaften mit einem behälter-autonom arbeitenden Brandschutzsystem als eigene Brandschutzzone zertifiziert werden. Daher gibt es aus Brandschutzgründen keinerlei Einschränkungen für die Anzahl der Batteriebehälter, die in einem bestimmten räumlichen Bereich gelagert sind.

Eine gezielte Kühlung und gegebenenfalls eine Brandeindämmung kann durch Flutung einer betroffenen Batterie ohne Einsatz der Feuerwehr lokal eng begrenzt und ohne Übergreifen auf andere Batterien erfolgen.

Eine automatische Entnahme defekter oder ausgefallener Batterien kann immer durch das gleiche Handling durch den Kran erfolgen.

Es ergibt sich eine deutlich höhere, bis zu 10-fach höhere Speicherdichte gegenüber dem Stand der Technik.

Es ergibt sich eine vollautomatische Ein- und Auslagerung von Batterien in das bzw. aus dem Blocklager durch Deckenkräne oder Portalkräne.

Es ergibt sich, dass eine variable Einlagerung gleichartiger Batterien unterschiedlicher Maße und mit jeweils eigenen Batteriemanagementsystemen in einem Stapel möglich ist, solange in dem Stapel für alle dort vorhandenen Batterien dasselbe Löschmittel verwendet werden kann.

Es ergibt sich, dass das Lagervolumen in allen drei Dimensionen anwachsen kann, was eine hohe Flexibilität in der zugehörigen Logistik und Hallennutzung schafft.

### ZEICHNUNGEN

Ausführungsbeispiele der Erfindung sind in den Zeichnungen dargestellt und in der nachfolgenden Beschreibung näher erläutert.
Figur 1 ist eine perspektivische Draufsicht von seitlich schräg oben auf einen erfindungsgemäßen Traktionsbatteriebehälter.
Figur 2 ist eine perspektivische Unteransicht von seitlich schräg unten auf den Traktionsbatteriebehälter aus Figur 1.
Figur 3 ist eine vergrößerte Einzeldarstellung eines Zentrierbolzens des in Figur 1 und Figur 2 gezeigten Traktionsbatteriebehälters in halb durchgeschnittener Ansicht.
Figur 4 ist eine schematische Schnittdarstellung eines Wasserkanals, der durch drei übereinander gestapelte Traktionsbatteriebehälter nach Figur 1 gebildet ist, wobei die Batteriekammer nur des obersten Behälters geflutet dargestellt ist.
Figur 5 zeigt eine schematische Darstellung der elektrischen Verschaltungen der Batterie und ihrer Ansteuerungen des in der Figur 1 dargestellten Traktionsbatteriebehälters.
Figur 6 zeigt eine schematische Darstellung der elektrischen Verschaltungen nach Figur 5 mehrerer gestapelter der in Figur 1 und Figur 2 dargestellten Traktionsbatteriebehälter.
Figur 7 zeigt eine perspektivische Darstellung von schräg seitlich oben auf einen Verschlussdeckel für einen in Figur 1 dargestellten Traktionsbatteriebehälter.
Figur 8 zeigt eine perspektivische Zeichnung einer möglichen gestapelten Anordnung der in Figur 1 und Figur 2 dargestellten Traktionsbatteriebehälter aus 5 Reihen von 5 Reihen aus jeweils nebeneinander angeordneten Stapeln mit jeweils 20 übereinander angeordneten Traktionsbatteriebehältern nach Figur 1.
Figur 9 zeigt ein Ablaufdiagramm mit den wesentlichen Schritten eines automatisch ablaufenden Brandschutzverfahrens gemäß einem Ausführungsbeispiel der vorliegenden Erfindung.

### BESCHREIBUNG DER AUSFÜHRUNGSBEISPIELE

In den Figuren bezeichnen gleiche Bezugszeichen gleiche oder funktionsgleiche Komponenten.

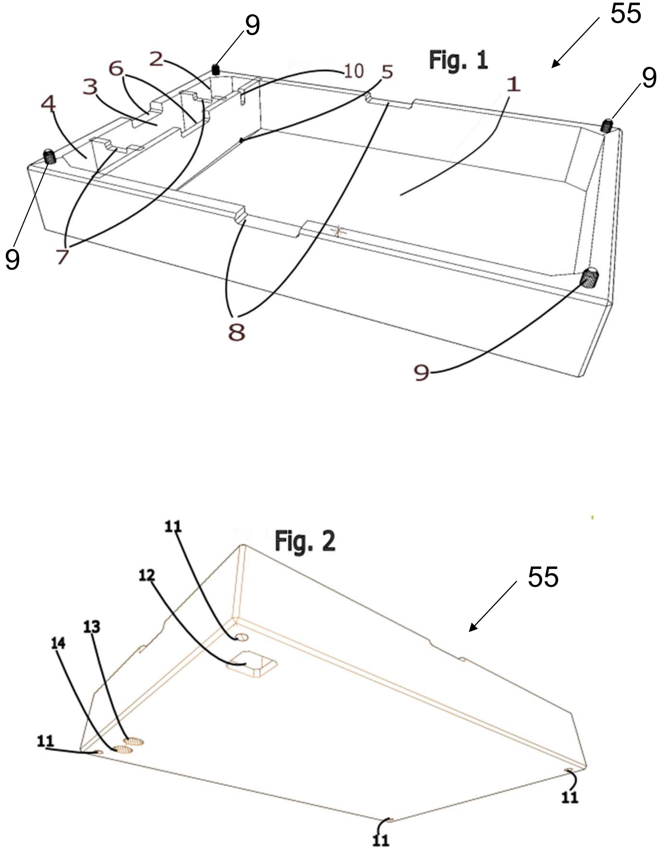

Figur 1 ist eine perspektivische Draufsicht von seitlich schräg oben auf einen erfindungsgemäßen Traktionsbatteriebehälter in Form einer quaderförmigen Wanne, auf die hier auch als "Batteriewanne" oder "Wanne" 55 Bezug genommen wird.

Figur 2 ist eine perspektivische Unteransicht von seitlich schräg unten auf den Traktionsbatteriebehälter aus Figur 1.

Mit gemeinsamem Bezug zu den Figuren 1 und 2 hat der Behälter 55 vier Wände und einen Boden mit jeweils einer Wandstärke von 15 cm, und Außenmaße von ca. 2,30 m Breite und ca. 3,30 m Länge und ca. 0,6 m Höhe.

Die Batteriewanne 55 ist eine robuste Wanne aus Beton, die durch Betonguss hergestellt ist, mit einem mehrteiligen, in dem Beispiel aus vier Kammern bestehendem Kammersystem. Eine Batteriekammer 1 ist die weitaus größte Kammer und enthält die Traktionsbatterie inklusive des dazugehörigen Batteriemanagementsystems (BMS). Eine Wasserkammer 2 enthält Rohre und Flansche für die Flutung der Batteriekammer 1 bei Überhitzung und im Brandfall. Eine Elektronikkammer 3 enthält im Wesentlichen die Steuer- und Überwachungselektronik für die Traktionsbatterie. Eine Steckerkammer 4 enthält die Steckverbinder für die automatische Verkettung der elektrischen Versorgungsanschlüsse.

Mehrere der Wannen 55 können automatisiert gestapelt werden und sind dafür an den vier Außenecken der Wannen mit sehr robusten Halte- und Zentriervorrichtungen 9 versehen. Auf der Unterseite der Wanne 55 sind Öffnungen eingebracht für die Herstellung einer Steigleitung 14 und einer Abflussleitung 13 des Wassers. Eine weitere Öffnung 12 ist für die unteren Stecker- und Buchsen Anordnungen vorgesehen.

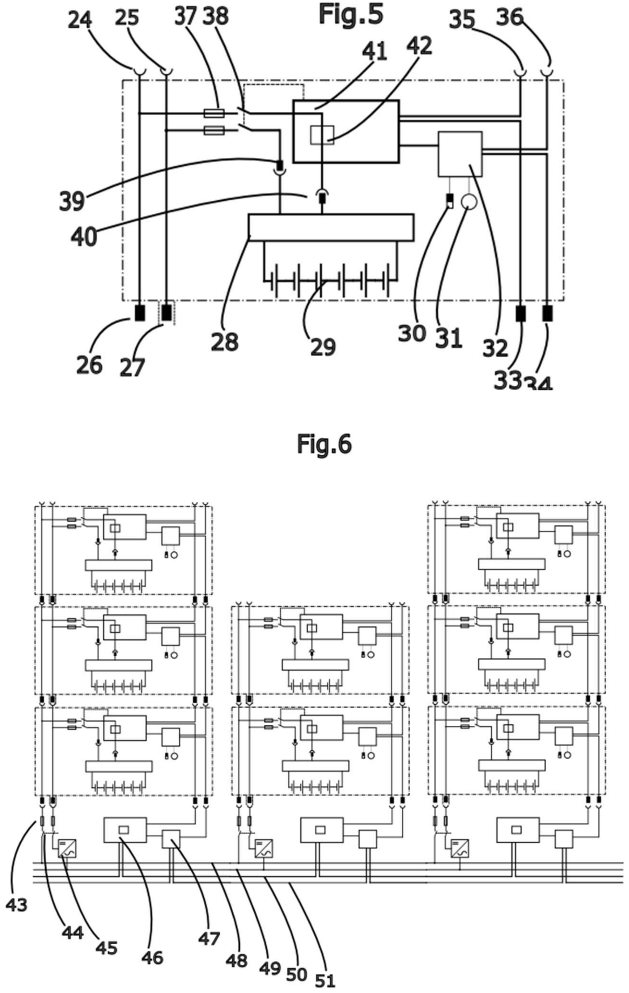

Die größte Kammer 1 ist so angelegt, dass sie, wie in Figur 5 zur Ergänzung verschaltet gezeigt, eine komplette Traktionsbatterie 29 inklusiv des Batterie-Management-Systems 28 und des Ladesteckers 40 aufnehmen kann. Eine Fixierung der Traktionsbatterie 29 erfolgt manuell über Sandsäcke oder Keile aus nichtbrennbaren Materialien. Auch Schüttgut ist möglich.

Eine der kleineren Kammern, die Steckerkammer 4 enthält einem dort vorhandenen oberen und unteren Bereich ein Stecker-Buchsen-Anschluss-System, das dem Stand der Technik entspricht. Damit können die gestapelten Behälter untereinander leistungs- und datentechnisch miteinander verbunden werden:
Figur 5 zeigt eine schematische Darstellung der elektrischen Verschaltungen der Batterie und ihrer Ansteuerungen des in der Figur 1 dargestellten Traktionsbatteriebehälters. Im Folgenden wird ergänzend auf Figur 5 Bezug genommen.

Die Stecker und Buchsen im unteren Bereich sind dafür bündig mit dem Boden der Wanne ausgeführt, da sie den satten Kontakt der Behälterauflageflächen aneinander nicht stören dürfen. Die Stecker 26 und Buchsen 24 führen den örtlichen Drehstrom dreiphasig mit Neutralleiter und Schutzerde, wobei mehrere Einzelkontakte parallel verschaltet werden, um die Stromtragfähigkeit zu erhöhen. Die Stecker 27 und Buchsen 25 sind beidseitig finger-kontaktsicher ausgeführt und führen den Gleichstrom der Batterien. Die Sicherungen 37 und die Kontakte 38 erlauben eine sichere Parallelschaltung aller gestapelter Batterien. Die Hochvoltseite 28 der Traktionsbatterie 29 wird über den vorhandenen mitgelieferten Motorstecker 39 der Traktionsbatterie direkt verbunden. Weiterhin enthält die Steckerkammer 4 im oberen und unteren Bereich ein Stecker-Buchsen-Anschluss System für den Kommunikationsbus. Dies kann ein Ethernet-basiertes Bussystem sein. Über den Stecker 33 und die Buchse 35 werden die Signale geführt. Ein weiteres Stecker-Buchsen-Anschlusssystem koppelt über den Stecker 34 und die Buchse 36 das Brandmeldesystem 32 in der Kammer 3 mit der Brandmeldezentrale 47 (nur in Figur 6 abgebildet).

Eine weitere kleine Kammer, die Elektronikammer 3 enthält das elektrische Steuersystem 41 der Wanne. Über dieses Steuersystem wird die im Behälter 55 gelagerte und aufgestapelte Batterie gesteuert und die Kommunikation mit ihr und den diversen Sensoren, die sie überwachen, sichergestellt. Dazu wird eine Wallbox 42 nach dem aktuellen Stand der Technik zwischen der örtlichen Anschlussverkabelung und dem Anschlussstecker 40 verschaltet. Ebenfalls in dieser Elektronikammer 3 befindet sich ein Brandmeldesystem 32, auf das weiter unten näher eingegangen wird.

Die erfindungsgemäße Batteriewanne besitzt ein aktives Belüftungssystem. Stirnseitig im Bereich der Eelktronikkammer 6 befinden sich Lüfter für die Kühlung der elektronischen Komponenten, was aus Gründen erhöhter Klarheit in Figur 1 nicht dargestellt ist. Der Luftstrom wird anschließend zur Batteriekammer geleitet und kühlt dort die Batterie. Danach verlässt der erwärmte Luftstrom die Batteriewanne durch Öffnungen 8 an beiden Längsseiten der Batteriewanne.

Sollte die Abwärme wegen eines zu starken oder schnellen elektrischen Be- oder Entladens der Batterie nicht ausreichend abgeführt werden können, besteht die Möglichkeit, durch ein aktives Wasserkühlsystem über die Öffnung 10 aus dem Bereich der Kammer 2 zusätzliche Kälteleistung durch eine elektrische Pumpe und ein Schlauchsystem bereitzustellen was ebenfalls aus Gründen erhöhter Klarheit in Figur 1 nicht dargestellt ist.

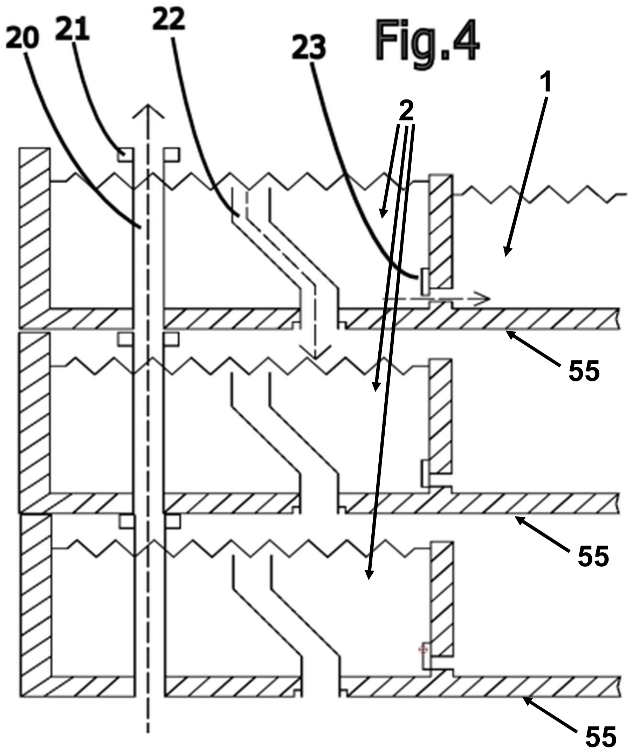

Eine weitere kleine Kammer, die Wasserkammer 2 enthält diverse Anschlüsse und Rohrleitungssysteme 20 und ein Wasserschloss 22 für die Kühlung und Bereitstellung von Löschwasser, wie es in Figur 4 prinzipiell dargestellt ist.

Figur 4 illustriert eine schematische Schnittdarstellung eines Wasserkanals, der durch drei übereinander gestapelte Traktionsbatteriebehälter 55 nach Figur 1 gebildet ist, wobei die Batteriekammer 1 nur des obersten Behälters geflutet dargestellt ist.

Die Wasserversorgung wird über mit Dichtungen 21 versehene, einzeln in jedem Behälter vorhandene Rohrstücke hergestellt, die jeweils ein Segment eines Löschmittelkanals bilden, der beim passgenauen Aufsetzen der einzelnen Behälter übereinander zu einem Stapel automatisch entsteht. Die aufsteigende Wassersäule steigt dabei durch das aus den einzelnen Rohrstücken gebildete Steigrohr 20 bis zur obersten Wanne und fällt dann in die Kammer des Wasserschlosses 22. Überschüssiges Wasser läuft über einen Überlauf 22 in die darunterliegende Wanne. Ein Ventil oder Schieber 23 verschließt oder öffnet einen Durchgang durch ein Durchgangsloch 5 in der Wand zwischen Wasserkammer 2 und Batteriekammer 1. Damit kann die Traktionsbatterie im Bedarfsfall vollständig geflutet werden. Wenn die Batteriekammer vollständig geflutet ist, läuft überschüssiges Wasser aus der Batteriekammer 1 wieder zurück in die Wasserkammer 2 des betroffenen Behälters 55. So wird vermieden, dass Wasser außen am Stapel herunterläuft und durch eventuell vorhandene Undichtigkeiten zwischen den Auflageflächen der Behälter in einen anderen Behälter des Stapels eindringen kann.

Alle Kammern sind über am oberen Rand der Wände zwischen den Kammern gebildete Öffnungen 6, 7, 8, 10 miteinander verbunden, so dass Medien und Kabel manuell ausgetauscht und verlegt werden können. Gleichzeitig dienen die Öffnungen als Be- und Entlüftungsöffnungen. Für Transportaufgaben im öffentlichen Raum werden die äußeren Öffnungen verschlossen bzw. mit feuerhemmenden Rauchgasfiltern und Matten ausgelegt.

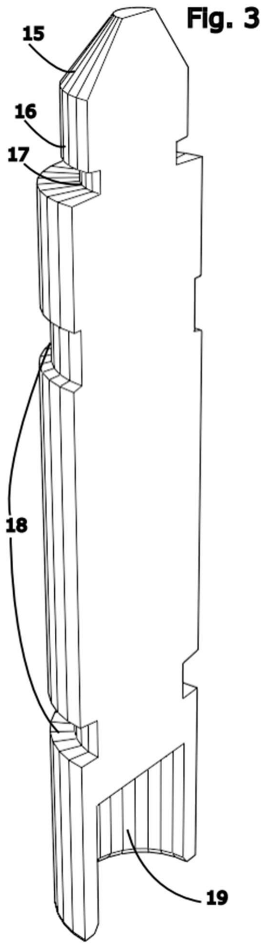

Im Folgenden wird ergänzend auf Figur 3 Bezug genommen.

Figur 3 ist eine vergrößerte Einzeldarstellung eines Zentrierbolzens des in Figur 1 und Figur 2 gezeigten Traktionsbatteriebehälters in halb durchgeschnittener Ansicht.

Die Zentriervorrichtung 9 besteht aus vier, jeweils an den Eckbereichen eines Behälters angeordneten Zentrierbolzen, die rotationssymmetrisch als Welle mit nachfolgend beschriebenen Ausfräsungen hergestellt sind. Jeder Zentrierbolzen hat oben einen Konus 15, daran anschließend einen zylinderförmigen Bereich 16, daran anschließend eine erste Einkerbung 17, , die zusammen mit dem Konus 15 über den oberen Rand des Behälters hinausragt und vom Lastaufnahmemittel des Krans gegriffen werden können.

Jeder Zentrierbolzen hat darüber hinaus weitere Einkerbungen 18, die über den weiter nach unten verlaufenden, zylindrischen Hauptteil des Bolzens verteilt angeordnet sind, und unten eine trichterförmige Ausfräsung 19. Diese schließt an der Wannenunterseite 11 bündig ab. Diese Zentriervorrichtung 9 erfüllt mehrere Aufgaben gleichzeitig:
Senkrecht an den Ecken der Wanne angebracht erlauben die vier Zentrierbolzen ein erstes Vorzentrieren durch den Konus beim vertikalen Aufsetzen einer Wanne auf eine darunter befindliche gleicher Bauart, indem die trichterförmige Ausfräsung des aufzusetzenden Behälters auf die Konusflächen des darunter befindlichen Behälters aufgleitet.

Anschließend kann dann eine durch die Form des Zentrierbolzens geführte, dann vollständig zentriert und linear abwärts gerichtete Absetzbewegung entlang eines zylinderförmigen Bereichs 16 des Bolzens erfolgen, damit die Stecker und Buchsen des elektrischen Stecker-Buchsen-Anschluss-Systems den Herstellerangaben entsprechend ineinander eintauchen können.

Die Wellen haben schließlich im oberen Bereich eine ringförmige Einkerbung 17. In diese kann ein mit dem Lastaufnahmemittel des Krans verbundenes formangepasstes Eingriffteil eingreifen, wenn es beispielsweise gabelförmig ausgebildet ist und mit den Gabelzinken einen Formschluss damit bilden. Die Einkerbung 17 bildet damit eine behälterseitige Eingriffteilaufnahme für das vorgenannte kranseitige Eingriffteil. Weitere ringförmige Einkerbungen 18 erlauben eine feste Verbindung der Wellen mit dem sie umgebenden Beton.

Im Folgenden wird auf Figur 6 Bezug genommen.

Figur 6 zeigt eine schematische Darstellung der elektrischen Verschaltungen nach Figur 5 mehrerer gestapelter der in Figur 1 und Figur 2 dargestellten Traktionsbatteriebehälter 55.

Die Traktionsbatteriebehälter 55 werden auf eine Unterkonstruktion 54 automatisch gestapelt, das al Basissegment für jeden Stapel dient. Dabei handelt es sich um ein massives Gestell aus Stahlträgern oder aus einer Betonkonstruktion. Sie nimmt die darüber gestapelten Kräfte auf und leitet sie in den Hallenboden.

Eingebaut einen Hohlraum in der Unterkonstruktion befindet sich eine Wechselrichterstation 46, die die Hochvoltspannung der Traktionsbatterien in den örtlichen Drehstrom umwandelt. Eine dort in einem Steuerschrank 46 vorhandenen Überwachungslogik überwacht alle Funktionen eines oder alternativ mittels entsprechender Verschaltungen mehrerer Stapel und kommuniziert über das gesteckte Bussystem mit den lokalen Steuerungen in den Behältern und damit mit den Traktionsbatterien. Gleichzeitig erhält sie über eine Schnittstelle Informationen von der Brandmeldezentrale 47. Über die Sicherungen 43 und die Notschalter 44 sind die Leistungsversorgungen im Stapel geschützt. Entlang der Unterkonstruktion verlaufen vier Bussysteme. Über eine Busbar 48 verläuft die örtliche Drehstromversorgung. Eine weitere Busbar 49 führt die gespeicherte Energie getrennt als Drehstrom zurück ins örtliche Netz. Über eine weitere Busbar 50 erfolgt die Kommunikation der Steuerungen untereinander zu einem der Überwachung und Steuerung dienenden SCADA System vom Stand der Technik. Eine Busverbindung 51 verbindet die Brandmeldeanzeige mit separat vorgesehenen Brandmeldezentralen 47.

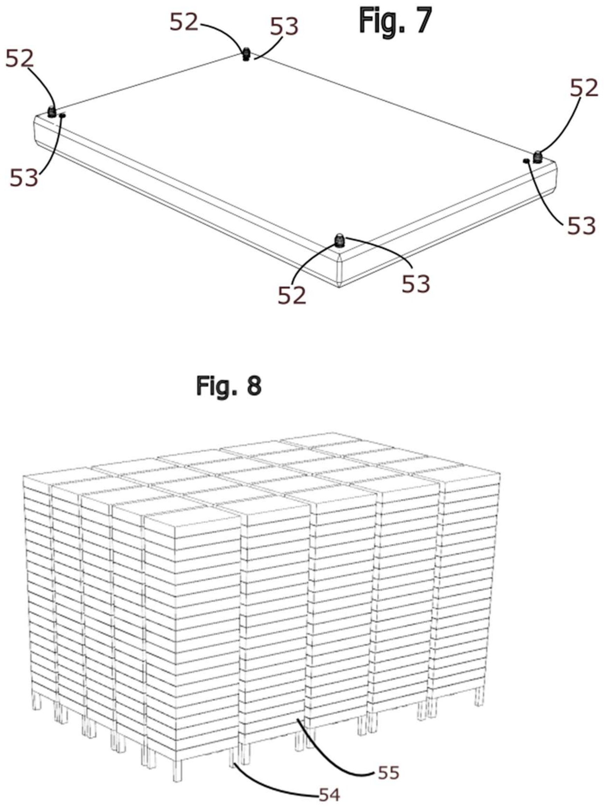

Figur 7 zeigt eine perspektivische Darstellung von schräg seitlich oben auf einen Verschlussdeckel für einen in Figur 1 dargestellten Traktionsbatteriebehälter.

Für die oberste aufgestapelte Batteriewanne kann ein separater Deckel Figur 7 vorgesehen werden. Dieser ist mit identischen aber kürzeren Zentriervorrichtungen 52 ausgestattet. Damit ist eine automatische Bestückung möglich. Verriegelungsbolzen 53 in den vier Ecken ermöglichen einen formschlüssigen Verschluss mit der Wanne. Damit der Deckel, der sicherheitshalber immer auf dem obersten Behälter eines Stapels abgelegt und dort automatisch verschraubt wird, den Löschwasserkanal nicht absperrt, ist auf der Unterseite des Deckels eine Aussparung vorgesehen, die in Figur 7 der besseren Klarheit halber nicht eingezeichnet ist Eine solche Aussparung ist bevorzugt auch für die höher aufragenden Stecker in der Steckerkammer vorgesehen.

Figur 8 zeigt eine perspektivische Zeichnung einer möglichen gestapelten Anordnung der in Figur 1 und Figur 2 dargestellten Traktionsbatteriebehälter aus 5 Reihen von 5 Reihen aus jeweils nebeneinander angeordneten Stapeln mit jeweils 20 übereinander angeordneten Traktionsbatteriebehältern 55 nach Figur 1. Ein solchermaßen erfindungsgemäß gebildetes Blocklager erreicht eins sehr hohe Kapazitätsdichte, wie bereits durch die Zeichnung illustriert wird.

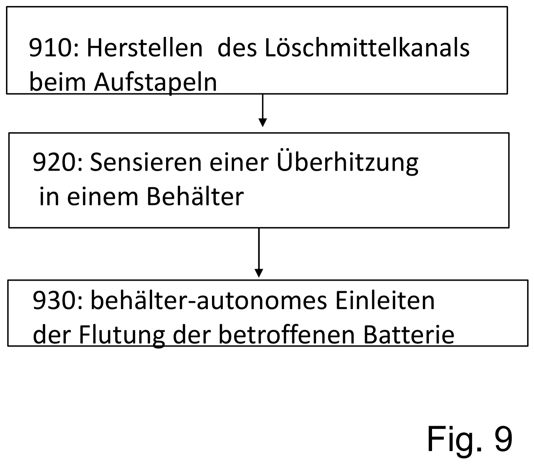

Figur 9 zeigt ein Ablaufdiagramm mit den wesentlichen Schritten eines automatisch ablaufenden Brandschutzverfahrens gemäß einem Ausführungsbeispiel der vorliegenden Erfindung.

Die Brandbekämpfung von "durchgehenden" Batterien stellt ein großes Problem für die Feuerwehren dar. Zwei wesentliche Strategien haben sich dabei bewährt. Zum Einen wird im Vorfeld eine strikte räumliche Trennung der Batterien voneinander mit feuerabschottenden Materialien angestrebt, um einen potentiellen Brandherd örtlich zu begrenzen. Zum Anderen erfolgt ein vollständiges Untertauchen der Batterien in einem Wasserbad, was zumindest bei lithiumbasierten Batterien erfolgreich ist. Der erfindunsgemäße Traktionsbatteriebehälter 55 erfüllt diese beiden Maßgaben, indem er zum Einen aus ausreichend dicken Beton hergestellt ist, und zum Anderen, indem er, wenn er erfindungsgemäß zu einem Stapel aus erfindungsgemäßen Behältern 55 aufgestapelt ist, automatisch in einem Schritt 910 einen sofort funktionsfähigen, stapelinternen Löschmittelkanal aus einzelnen, miteinander fluidisch verbundenen Wasserkammern 2 gebildet hat, aus dem bei Sensieren in einem Schritt 920 einer vorab definierten, zu hohen Temperatur in einem Behälter 55 eine "durchgehende" Batterie in ihrem Behälter gezielt mit dem geeigneten Löschmittel durch Öffnung eines Öffnungselements 23 geflutet werden kann, Schritt 930, wodurch eine Kühlung der Batterie bzw. auch ein im Behälter vorhandener Batteriebrand sofort gelöscht werden kann.

Ein in den Traktionsbatteriebehälter integriertes, autonom arbeitendes Brandmeldesystem 32 enthält dazu eine Kombination aus Brandmeldern und Infrarotsensoren 30, das sämtliche Informationen direkt aus der Batteriekammer bekommt und Steuerungen zur Brandbekämpfung autonom und automatisch direkt in dem betroffenen Behälter veranlasst, ohne dass eine Kommunikation nach außen oder ein menschlicher Eingriff etwa des Managers des Blocklagers notwendig ist. Dazu werden die Infrarotsensoren 30 vorzugsweise an den seitlichen Luftaustrittsöffnungen 8 (Figur 1) montiert. Der Lade- oder Entladezyklus wird ab einer vorbestimmten Temperatur unterbrochen und die Batteriekammer 1 mit der Traktionsbatterie wird gezielt mit Wasser geflutet. Dazu wird der Schieber oder das Ventil 23 (Figur 4) geöffnet. Da der Wasserkanal in den übereinander liegenden Wasserkammern des Stapels aus Sicherheitsgründen bereits gefüllt ist, füllt sich die Batteriekammer 1 sofort durch Wasserzulauf durch die Bodenöffnung 5 (siehe Figur 1). Ist die Batteriekammer 1 voll, läuft das überschüssige Wasser über die Kammer 2 und die darunter befindlichen Wasserkammern der Wannen ab, ohne dass die anderen Batterien des Stapels oder deren Geräte in den zugehörigen Elektronikkammern und Steckerkammern nass und unbrauchbar werden.

Vorzugsweise wird jedoch zusätzlich zu diesem so gebildeten, behälter-autonom arbeitenden Brandschutzsystem die Information, dass eine Batterie überhitzt ist und geflutet wird, über das Kommunikationssystem zu einer Betreiberzentrale gegeben, um optional weitere Brandbekämpfungsmaßnahmen automatisch oder durch Personal selektiv veranlasst, einzuleiten. Aufgrund des unterschiedlichen Auslöseverhaltens und bei unterschiedlicher Platzierung der verschiedenen Sensoren in verschiedenen Kammern in der Batteriewanne kann dabei der Brandverlauf differenziert festgestellt werden, und unterschiedliche Brandausbreitungen sind dadurch erkennbar. Beispielsweise würde ein Schmorbrand in der Elektronikkammer aufgrund der dort vorhandenen Temperatursensoren zuerst erkannt werden, und zeitlich später würden auch die Rauchmelder in der Batteriekammer reagieren. Der gesamte Stapel würde dann abgeschaltet und der Temperaturverlauf verfolgt. Ein Schmorbrand würde dann erlöschen und eine Flutung wäre nicht erforderlich. Rauchgase könnten von benachbarten Stapel angesaugt werden und dort einen Fehlalarm auslösen. Das sollte das Personal vorzugsweise durch Deckenkameras erkennen können und entsprechend eingreifen. Die Belüftungsleistung der Lagerhalle kann dann beispielsweise gezielt hochgefahren werden. Sinkt die Temperatur nach einem ersten Alarm wieder, kann durch das Personal dann gezielt eine Entladung der Batterie eingeleitet werden. Damit kann dann die elektrische Brandlast weitgehend reduziert werden. Das Personal bestimmt auch den Zeitpunkt für die Auslagerung einer defekten Batteriewanne und überwacht diese während des Krantransportes.

Die geflutete Batterie wird weiter automatisch überwacht und kann bei Bedarf automatisiert lediglich durch Krantätigkeit aus dem Stapel entfernt werden.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Der erfindungsgemäße Behälter kann anstelle einer einzigen Batterie auch eine Mehrzahl von Batterien aufnehmen, die auf dasselbe Löschmittel ansprechen, sofern der Behälter groß genug ist. Sie müssen dann vor dem Aufstapeln manuell elektrisch miteinander verbunden werden. Dabei können die Batterien nebeneinander oder / übereinander im Behälter angeordnet sein.

Der erfindungsgemäße Behälter kann alternativ aus ähnlichem brandhemmendem und statisch belastbarem Material wie Beton gefertigt sein.

Der erfindungsgemäße Behälter kann auf einfache Weise in anderen Abmessungen hergestellt werden, etwa um neue Batteriegrößen aufzunehmen oder um Zusatzaggregate aufzunehmen, die im Zuge der immer weiter fortschreitenden Batterieentwicklung notwendig werden könnten.

Bevorzugt werden die Behälter einzeln auf- und abgestapelt, damit die durch den Kran bewegte Masse möglichst gering bleibt und die durch die Kranbewegung bewirkten Schwingungen leichter zu dämpfen sind. Bei flacher Bauweise von Batterie und Behälter und Vorhandensein von robuster und effizienter Technik am Kran zum Ausgleich der Schwenkbewegung kann es vorteilhaft sein, eine begrenzte Anzahl von Behältern - beispielsweise zwei oder drei - auf einmal stapeln zu können. Die erwähnten Aufnahmen für Eingriffteile eines Krans zum Abheben eines oder gleichzeitig mehrerer Behälter können dann beispielsweise auch an den Kanten der Behälter vorgesehen sein, beispielsweise als mit dem Behälter verschraubte, nach außen über die Außenkontur des Behälters hinausragende Ansatzteile, wodurch ein Kran mehrere Behälter gleichzeitig abstapeln und wieder aufstapeln kann. Dann dienen die Zentriervorrichtungen nicht gleichzeitig auch als Eingriffteilaufnahme für den Kran.

Das erfindungsgemäße Brandschutzverfahren ist leicht an andere Löschmittel als Wasser anpassbar, weil der Wasserkanal stapelspezifisch auch mit anderen Löschmitteln gefüllt werden kann, wenn eine andere, eventuell zukünftig vorhandene Batterietechnologie dies erforderlich machen sollte.

Schließlich können die Merkmale der Unteransprüche zu jeweiligen Nebenansprüchen im Wesentlichen frei miteinander und nicht durch die in den Ansprüchen vorliegende Reihenfolge miteinander kombiniert werden, sofern sie unabhängig voneinander sind.

## Patentansprüche

1. Behälter (55) zur Lagerung von Traktionsbatterien (29) von Elektrofahrzeugen, mit einem Boden und mit Seitenwänden, die Belüftungsöffnungen (6, 7, 8, 10) aufweisen, **gekennzeichnet dadurch,**
**dass** der Boden und die Seitenwände im Wesentlichen aus Beton oder einem anderem, ähnlich druckfestem und hitzeresistentem Material bestehen,
wobei die Seitenwände eines Behälters (55) obere Auflageflächen aufweisen zur Herstellung einer stabilen Auflage von unteren Auflageflächen der Seitenwände eines darüber angeordneten Behälters gleicher Bauart,
wobei die Seitenwände eine Wandstärke besitzen, die derart ausgebildet ist, dass deren Tragfähigkeit ein Aufeinanderstapeln einer Anzahl von bevorzugt wenigstens 10 batteriebeladenen Behältern (55) gleicher Bauart ermöglicht,
wobei an dem Behälter (55) Aufnahmen (17) für Eingriffteile eines Krans zum Abheben eines oder mehrerer Behälter (55) vorgesehen sind,
wobei an dem Behälter Zentriervorrichtungen (9, 15) vorgesehen sind, die für ein passgenaues Aufeinanderstapeln der Behälter (55) durch einen Kran eingerichtet sind,
und wobei in dem Behälter (55) eine Wasserkammer (2) vorgesehen ist, die eingerichtet ist zur Aufnahme von Lösch- oder Kühlwasser und zu dessen automatisch bewirkten Weiterleitung durch ein Öffnungselement (23) zur Flutung der Batterie im Notfall,
und wobei die Wasserkammer (2) dazu eingerichtet ist, beim Aufeinanderstapeln von Behältern (55) ein Segment eines Löschmittelkanals (20) zu bilden, der dazu eingerichtet ist, die weiteren Behälter (55) desselben Stapels mit Löschmittel zu versorgen.

2. Behälter (55) nach Anspruch 1, wobei in dem Behälter (55) eine Batteriekammer (1) vorgesehen ist, die eingerichtet ist zur separaten Lagerung der Batterie (29) separiert von anderen, in den Behälter (55) aufnehmbaren, technisch notwendigen Geräten zum Betreiben der Batterie (29).

3. Behälter (55) nach Anspruch 2, wobei das Öffnungselement (23) zwischen der Wasserkammer (2) und der Batteriekammer (1) vorgesehen ist.

4. Behälter (55) nach Anspruch 3, wobei das Öffnungselement (23) auch dazu eingerichtet ist, die Öffnung zu verschließen.

5. Behälter (55) nach Anspruch 1, wobei er als wesentlichen Bestandteil einen einstückig aus Betonguss hergestellten, quaderförmigen Gusskörper enthält.

6. Behälter (55) nach dem vorstehenden Anspruch, wobei die Zentriervorrichtungen (9, 15) durch Zentrierbolzen gebildet sind, die in den vier Eckbereichen des quaderförmigen Gusskörpers in den Beton eingegossen sind.

7. Behälter (55) nach Anspruch 1, wobei in dem Behälter (55) eine von der Batteriekammer (1) separiert gebildete Steckerkammer (4) zur Aufnahme eines elektrischen Stecker-Buchsen-Anschlusssystems zum Management des Batteriestroms und der Steuerung der Kommunikation zu und von technisch notwendigen Geräten zum Betreiben der Traktionsbatterie (29) vorgesehen ist, und eine obere Abschlussplatte Buchsenkontakte und eine untere Abschlussplatte Steckerkontakte enthält, wobei in dem Behälter (55) eine Bodenöffnung (12) vorgesehen ist, die eingerichtet ist zur Durchführung der Steckerkontakte.

8. Behälter (55) nach Anspruch 1, wobei er Sensoren (30) zur Erfassung der in dem Behälter (55) vorherrschenden Temperatur aufweist.

9. Verfahren zum Betreiben eines Lagers von Batterien mit großer Ladekapazität, insbesondere für Traktionsbatterien (29) von Elektrofahrzeugen, enthaltend die Schritte:
Aufstapeln einer Mehrzahl von Behältern (55), die eine oder mehrere Batterien enthalten, auf einen Stapel,
Lagern von mehreren Stapeln in einer Halle,
Benutzen eines automatisch und behälter-autonom arbeitenden Brandschutzsystems für die Batterien, wobei das Brandschutzsystem in jedem der Behälter (55) vorhanden und dazu eingerichtet ist, einen Behälter (55) automatisch mit einem Kühlmittel oder einem Löschmittel zu fluten, wenn eine Batterie überhitzt bzw. in Brand gerät,
Verbinden der Mehrzahl an Batterien vorzugsweise über einen Wechselrichter mit einem Stromnetz.

10. Automatisch ablaufendes Brandschutzverfahren für Batterien mit großer Ladekapazität, insbesondere für Traktionsbatterien von Elektrofahrzeugen, wobei sich die Batterien in einem stapelbaren Batteriebehälter (55) befinden und in einem Batterielager stapelweise gelagert sind, enthaltend die Schritte:
Herstellen (910) eines den Stapel durchquerenden Löschmittelkanals (20) beim Aufstapeln eines Behälters (55) auf einen anderen,
Sensieren (920) einer Überhitzung einer Batterie oder deren in-Brand-geraten durch an einem jeweiligen Behälter (55) angebrachten Wärmesensor,
bei einer sensierten Überhitzung oder bei in-Brand-geraten einer Batterie: Einleiten (930) eines behälter-autonomen Löschvorgangs, der die Batterie in dem Behälter (55) automatisch mit dem Löschmittel aus dem Löschmittelkanal (20) flutet, durch Öffnen eines Öffnungselements (23) zwischen Löschmittelkanal (20) und Batterie.
